# EUROPÄISCHE PATENTSCHRIFT

(11) **EP 2 018 498 B1**
(45) Veröffentlichungstag und Bekanntmachung des Hinweises auf die Patenterteilung: **28.08.2013**
(21) Anmeldenummer: 07724597.5
(22) Anmeldetag: 26.04.2007
(51) Int. Cl.: B22D 17/32, F16K 31/124, F16K 31/163, F15B 11/024, F15B 11/044

(54) **VENTIL UND HYDRAULISCHE STEUERANORDNUNG**
VALVE AND HYDRAULIC CONTROL ARRANGEMENT
VANNE ET ARRANGEMENT DE COMMANDE HYDRAULIQUE

(30) Priorität: 05.05.2006 DE 102006020982; 22.11.2006 DE 102006055393
(43) Veröffentlichungstag der Anmeldung: 28.01.2009
(60) Teilanmeldung: 10008363.3
(73) Patentinhaber: Robert Bosch GmbH, 70442 Stuttgart (DE)
(72) Erfinder: BEHL, Helmut, 97855 Triefenstein (DE); CHMIEL, Marek, 97078 Würzburg (DE); ENGERT, Holger, 97855 Triefenstein (DE); DANTLGRABER, Jörg, 97816 Lohr am Main (DE)
(74) Vertreter: Thürer, Andreas
(86) Internationale Anmeldenummer: PCT/EP2007/003667
(87) Internationale Veröffentlichungsnummer: WO 2007/128420

(56) Entgegenhaltungen:
- EP-A2- 0 384 157
- CH-A5- 660 512
- DE-A1-102005 035 170
- FR-A1- 2 265 481
- GB-A- 2 162 340

## Beschreibung

Die Erfindung betrifft ein Ventil gemäß dem Oberbegriff des Patentanspruchs 1. Des Weiteren bezieht sich die vorliegende Erfindung auf eine hydraulische Steueranordnung.

Ventile, welche vorwiegend einen Durchflussquerschnitt zwischen zwei Fluidanschlüssen steuern, können sehr einfach aufgebaut sein und werden meist zur Ansteuerung hydraulischer Verbraucher mit großem Volumenstrombedarf eingesetzt. Ein Beispiel für solche Ventile stellen die 2/2-Wege-Einbauventile - auch als Logikventile bezeichnet - der Firma Bosch Rexroth AG dar, die im Datenblatt RD 21010/03.05 hinsichtlich der Realisierung von Wegeventilfunktionen und im Datenblatt RD 21050/02.03 hinsichtlich der Realisierung von Druckfunktionen beschrieben sind.

Oft ist es wünschenswert, mit einem solchen Ventil eine Drosselung des Volumenstroms zu bewerkstelligen, z.B. bei der Dekompression eines Pressenzylinders oder zum Einstellen einer Geschwindigkeit eines hydraulischen Verbrauchers, z.B. eines Gießzylinders einer Druckgussmaschine. Dazu ist in einen Steuerdeckel des Einbauventils, der die Einbauöffnung abdeckt, ein Anschlagsstift eingesetzt, der in einen Federraum des Einbauventils vorsteht und so den Hub des Schließgliedes begrenzt. Die Eintauchtiefe des Anschlagsstifts in den Federraum und somit der maximale Hub des Schließglieds lässt sich über ein Schraubgewinde manuell justieren. Der prinzipielle Aufbau eines solchen Ventils mit Hubbegrenzung ist auf Seite 103 des Lehrbuches "Der Hydrauliktrainer Band 4, Technik der 2-Wege-Einbauventile", 1989, Mannesmann Rexroth GmbH, Lohr a. Main, ISBN 3-8023-0291-5, beschrieben. Gemäß dem Datenblatt RD 63147/01.94 "Pressenmodule Typ P" der Firma Bosch Rexroth AG wird ein solches Ventil (vgl. Positionen (.150) und (.151) auf Seite 8a und 9) zur Dekompression des Pressenzylinders eingesetzt. Den Einsatz zur Begrenzung der Geschwindigkeit des Pressenzylinders machen die Positionen (.520) und (.521) oder (.510) und (.511) ersichtlich.

Nachteilig an den herkömmlichen Steueranordnungen ist, dass für eine Drosselfunktion jeweils ein eigenes, separates Ventil benötigt wird. So wird das Ventil (.150)/(.151) z.B. zusätzlich zu dem Einlassventil (.110)/(.111) benötigt, obwohl beide Ventile mit demselben Abschluss des Zylinders verbunden sind. Die Ventile (.520)/(.521) oder (.510)/(.511) sind zusätzlich zu dem Einlassventil (.120)/(.121) vorhanden.

Die CH 660 512 A5 offenbart ein 2/2-Wege-Einbauventil mit einem Ventilkolben und einen Einsatz, an dem sich der Ventilkolben ständig abstützt. Die Position des Einsatzes - und damit die Position des Ventilkolbens - wird über eine elektromotorisch-hydraulische Folgesteuerung eingestellt.

Die EP 0 384 157 A2 zeigt ein 2/2-Wege-Einbauventil mit einem Ventilkolben und einem Betätigungskolben, die sich direkt oder über einen Betätigungsstift aneinander abstützen. Die Rückseite des Ventilkolbens ist zum Tank entlastet. Der Betätigungskolben besitzt eine dem Ventilkolben abgewandte Stirnfläche. Diese ist mit dem Eingangsdruck und mit einer Feder beaufschlagt. Der Betätigungskolben folgt dem Ventilkolben ständig und ist nicht in eine vorgegebene Position stellbar.

Die GB 2 162 340 A offenbart ein 2/2-Wege-Einbauventil mit einem Ventilkolben und mit einem Stellglied, welches eine Öffnung des Ventilkolbens begrenzt. Die Position des Stellglieds lässt sich über ein Druckgleichgewicht, das sich zwischen einem Zulauf-Drosselventil und einem Ablaufdrosselventil einstellt, durch Verstellung des Zulauf-Drosselventils einstellen.

In der FR 2265481 A1 wird eine Steuervorrichtung des Speicherabsperrventils in einer öldynamischen Presse zum Spritzgießen von Metallkörpern vorgestellt.

Es ist die Aufgabe der vorliegenden Erfindung, ein verbessertes Ventil anzugeben bzw. einen effizienteren Aufbau einer hydraulische Steueranordnung zu ermöglichen.

Diese Aufgabe wird durch ein Ventil mit den Merkmalen des Patentanspruchs 1 gelöst.

Das Ventil ist mit zwei Fluidanschlüssen und mit einem beweglich geführten Schließglied ausgestattet, das zwischen einer ersten Stellung, in der es einen Durchflussquerschnitt zwischen den zwei Fluidanschlüssen freigibt, und einer zweiten Stellung, in der es eine fluidische Verbindung zwischen den zwei Fluidanschlüssen sperrt, schaltbar ist. Durch ein Anschlagsglied ist der durch das Schließglied höchstens freigebbare Durchflussquerschnitt begrenzbar.

Eine Besonderheit der vorliegenden Erfindung ist es, dass das Anschlagsglied durch eine fernbetätigbare Stellvorrichtung zwischen verschiedenen Anschlagspositionen verstellbar ist. Auf diese Weise kann eine Begrenzung des Durchflussquerschnittes des Ventils und somit eine Drosselung des Volumenstroms willkürlich und insbesondere auch automatisch über eine Steuerung zugeschaltet werden. Die Begrenzung des Durchflussquerschnittes kann in jedem Betriebszyklus einer hydraulischen Steuerung, ggf. auch mehrmals, verstellt werden. Daneben kann das Ventil weitere Funktionen ausüben, beispielsweise die Funktion eines Rückschlagventils oder die Funktion eines einen großen Durchflussquerschnitt steuernden Schalt-Wegeventils. Durch das erfindungsgemäße Ventil mit seiner verstellbaren Begrenzung des Durchflussquerschnittes lassen sich mehrere Einzelventile einer herkömmlichen hydraulischen Steueranordnung ersetzen. Dies ermöglicht einen einfachen effizienten und robusten Aufbau einer hydraulischen Steueranordnung. Dadurch, dass das Ventil selbst auf dem Aufbau eines Schaltventils beruht, ist es einfach und kostengünstig darstellbar und zeichnet sich durch einen zuverlässigen Betrieb aus.

Eine besonders kurze Öffnungszeit des Ventils wird durch die sogenannte Aktivlogik-Bauweise erzielt. Dabei ist das Schließglied als Stufenkolben ausgebildet, der Stufenkolben begrenzt mit einer Ringfläche einen Ringraum und ist an der Ringfläche in Öffnungsrichtung mit einem Steuerdruck beaufschlagbar.

Weiterhin kann durch Ansteuerung des Ringraums das Schließglied am Anschlagsglied zur Anlage gebracht werden und über das Anschlagsglied positionsgeregelt verstellt werden.

Des Weiteren kann das Ventil zusätzlich zu der willkürlich vorgebbaren Begrenzung des Öffnungsgrades als sperrbares Rückschlagventil konfiguriert sein. Dazu sind am Stufenkolben zwei weitere Steuerflächen an gegenüberliegenden Stirnseiten gebildet, beide Steuerflächen sind von einem Druck in einem Ausgangsanschluss beaufschlagt und besitzen insgesamt einen Flächenüberschuss im Sinne eines Sperrens der fluidischen Verbindung. Eine vorteilhafte, einfache Bauweise und eine schnelle Schließreaktion erzielt man durch Vorsehen einer axialen Durchgangsbohrung am Stufenkolben.

Die Aufgabe wird des Weiteren durch eine hydraulische Steueranordnung gelöst, bei der das erfindungsgemäße Ventil zum Einsatz kommt. Dadurch, dass das Ventil neben seiner Wege- oder ggf. Druck-Schaltfunktion noch eine per Fernbetätigung verstellbare Begrenzung des Durchflussquerschnittes besitzt, können herkömmlicher Weise zusätzlich vorhandene Stromventile bzw. Drosselventile entfallen. Insbesondere lassen sich eine Dekompressionsfunktion oder eine Geschwindigkeitssteuerung in ohnehin benötigte Ventile, z.B. in Ventile zur Richtungssteuerung oder in Absicherungsventile, integrieren.

Vorteilhafte Ausgestaltungen der vorliegenden Erfindung sind in den Unteransprüchen angegeben.

Gemäß einer bevorzugten Ausgestaltung der vorliegenden Erfindung weist die Stellvorrichtung ein mit dem Anschlagsglied gekoppeltes Stellglied auf, welches zwischen vorgegebenen Stellpositionen verfahrbar ist. Die Festlegung vorgegebener Stellpositionen, die von dem Stellglied angefahren werden, ermöglicht die reproduzierbare Vorgabe von freigebbaren Durchflussquerschnitten. Dadurch kann beispielsweise, unter Annahme von bekannten Druckvorgaben bzw. Kraftvorgaben, eine Dekompressionsdauer oder eine Geschwindigkeit eines Verbrauchers einfach und präzise eingestellt werden. Eine besonders einfache Ausführung der Stellvorrichtung erlaubt ein Schalten des Stellgliedes zwischen zwei vorgegebenen Stellpositionen.

Wenn der bei einer vorgegebenen Stellposition höchstens freigebbare Durchflussquerschnitt justierbar ist, kann die vorgegebene Stellposition vorab im Rahmen der Fertigung einheitlich und ungeachtet der späteren Anwendung festgelegt werden. Ein dazu korrespondierender Durchflussquerschnitt kann dann bei der Inbetriebnahme entsprechend der gewünschten Anwendung festgelegt werden. Vorzugsweise ist dazu eine bei der vorgegebenen Stellposition eingenommene Anschlagsposition des Anschlagsglieds justierbar. Dies ermöglicht eine besonders einfache Einstellung von Betriebsparametern einer hydraulischen Steueranordnung, z.B. einer Geschwindigkeit, direkt am dafür maßgeblichen Ventil.

Gemäß einer besonders bevorzugten Ausgestaltung der vorliegenden Erfindung ist das Anschlagsglied durch einen hydraulisch beaufschlagbaren Kolben verstellbar. Der hydraulisch ansteuerbare Kolben ist ein sehr einfaches Stellglied, das insbesondere mit den Kolbenanschlägen über zwei mechanisch vorgegebene Stellpositionen verfügt. Außerdem gewährleistet die hydraulische Betätigung der Stellvorrichtung eine zuverlässige Ansteuerung der verschiedenen Stellpositionen. Die Ansteuerung kann unmittelbar aus der Hydraulikschaltung, insbesondere mit Hilfe von Vorsteuerventilen erfolgten.

Gemäß einer weiteren Ausgestaltung ist am Schließglied eine Steuerfläche vorhanden, an der ein in einem der Fluidanschlüsse anstehender Druck das Schließglied im Sinne einer Vergrößerung des Durchflussquerschnitts beaufschlagt. Eine Steuerfläche des Kolbens, an der dieser im Sinne einer stärkeren Begrenzung des Durchflussquerschnitts beaufschlagbar ist, ist größer als die besagte Steuerfläche des Schließglieds. Dadurch lässt sich ein sicheres Halten der Anschlagsposition auch bei Entgegenwirken hoher Drücke aus den Fluidanschlüssen gewährleisten.

Gemäß einer bevorzugten Ausgestaltung weist das Ventil einen das Schließglied umfassenden Einbausatz und einen Steuerdeckel auf, welcher eine den Einbausatz aufnehmende Einbaubohrung abdeckt. Zwischen dem Schließglied und dem Steuerdeckel ist ein Federraum gebildet, der Kolben ist in einem zylindrischen Hohlraum im Steuerdeckel beweglich geführt, und das Anschlagsglied steht vom Kolben ausgehend in den Federraum vor. Solche Einbauventile mit Steuerdeckel lassen sich für eine Vielzahl verschiedener Ventilanwendungen konfigurieren. Die Stellvorrichtung für den Anschlag - d.h. der zylindrische Hohlraum und der Kolben-im Steuerdeckel erweitert das Anwendungsspektrum solcher Einbauventile nochmals im Sinne einer Kombination verschiedener Ventilfunktionen in einem Ventil. So ist, wie schon gesagt, eine willkürlich veränderbare, insbesondere schaltbare Begrenzung des Durchflussquerschnittes zusätzlich zur vorgegebenen Ventilfunktion vorhanden. Zusätzlich kann durch das Verstellen das Anschlags auch ein Schließvorgang des Ventils beschleunigt werden. Lässt sich der Anschlag weit genug in Richtung des Schließgliedes verstellen, so kann das Schließglied auch gegen einen in Öffnungsrichtung wirkenden Druck geschlossen gehalten werden. Ebenso könnte bei einem Sitzventil auf diese Weise eine Abdichtung am Ventilsitz verstärkt werden.

Ein besonders einfacher und effizienter Aufbau des Steuerdeckels, der zudem eine Justierung der Anschlagsposition erlaubt, sieht vor, dass am Kolben eine Kolbenstange vorgesehen ist, welche an einer der Einbaubohrung abgewandten Seite des Steuerdeckels nach außen geführt ist, dass der Kolben und die Kolbenstange mit einer durchgängigen Axialbohrung versehen sind, und dass ein Stift in die Axialbohrung eingeschraubt ist, der in den Federraum vorsteht.

Ein in Normalstellung offenes Ventil lässt sich mit einem geringen Aufwand realisieren, wenn an dem Anschlagsglied ein Teller vorgesehen, an dem sich eine das Schließglied im Sinne einer Vergrößerung des Durchflussquerschnitts beaufschlagende Feder abstützt.

Vorzugsweise ist das Ventil in Sitzventilbauweise ausgeführt. Dies erlaubt eine einfache Herstellung und eine leckölfreie Absperrung eines der Fluidanschlüsse.

Eine weitere Ausgestaltung sieht eine Messvorrichtung vor, mit der eine Position des Anschlagsglieds erfassbar ist, insbesondere ein Wegsensor oder ein Endschalter. Durch den Endschalter ist z.B. eine Anschlagsposition erfassbar, bei der ein vorgegebener Mindestwert des höchstens freigebbaren Durchflussquerschnitts gewährleistet ist. Mit einer solchen Messvorrichtung lassen sich Sicherheitsvorschriften Rechnung tragen, die z.B. bei bestimmten Betriebszuständen eine uneingeschränkte Ventilöffnung fordern. Außerdem lässt sich mittels eines Wegmesssystems die Anschlagsposition im Rahmen einer Positionsregelung sehr genau und flexibel festlegen.

Das erfindungsgemäße Ventil lässt sich innerhalb kurzer Zeit auf einen beliebig vorgegebenen, zuverlässig einstellbaren Durchflussquerschnitt öffnen, wenn das Anschlagsglied als hydraulisches Stellglied ausgebildet ist und unter Verwendung eines Wegsensor zur Erfassung seiner Position einer Positionsregelung unterworfen ist. Der bei Öffnung des Ventils verfügbare Durchflussquerschnitt kann effizient und unkompliziert durch ein Sollsignal vorgegeben werden. Beim Auftreffen des Schließglieds auf den Anschlag dämpft das an das Stellglied angrenzende Ölvolumen etwaige Schwingungen. Ebenso kann das Dämpfungsverhalten über den Positionsregelkreis beeinflusst werden. Ein solches Ventil ist sehr vorteilhaft bei der Ansteuerung des Gießzylinders einer Druckgussmaschine, insbesondere der Schussphase, bei der der Gießzylinder innerhalb kürzester Zeit auf eine vorgegebene Geschwindigkeit beschleunigt werden soll.

Vorzugsweise ist zwischen dem Anschlagsglied und dem Schließglied eine hydromechanische Anschlagsdämpfung vorgesehen. Auf diese Weise wird insbesondere beim schnellen Öffnen des Schließglieds ein Einschwingvorgang verkürzt und eine Belastung des Anschlagsglieds reduziert.

Nachfolgend werden die vorliegende Erfindung und deren Vorteile unter Bezugnahme auf das in den Figuren dargestellte Ausführungsbeispiel näher erläutert.
- Figur 1: zeigt einen Schnitt durch ein in Normalstellung geschlossenes Einbauventil mit Steuerdeckel, das nicht Teil der Erfindung ist;
- Figur 2: zeigt einen Schnitt durch ein in Normalstellung geöffnetes Einbauventil mit Steuerdeckel, das nicht Teil der Erfindung ist;
- Figur 3: zeigt ein schematisches Schaltbild eines Pressensteuermoduls unter Verwendung der in Figur 1 und Figur 2 dargestellten Ventile, das nicht Teil der Erfindung ist;
- Figur 4: ist ein Einbauventil mit einer separat ansteuerbaren Steuerfläche und mit einem lagegeregelt verstellbaren Anschlag dargestellt, gemäß einem Ausführungsbeispiel der vorliegenden Erfindung,
- Figur 5: zeigt ein Einbauventil mit einer hydraulischen Folgesteuerung zur Kopplung des Anschlagsglieds und eines elektrischen Antriebs das nicht Teil der Erfindung ist;
- Figur 6: zeigt ein Einbauventil, bei dem das Anschlagsglied über einen seitlich angeordneten Elektromotor verstellbar ist und über eine Steuerfläche zur Kraftentlastung des Gewindetriebs verfügt das nicht Teil der Erfindung ist.

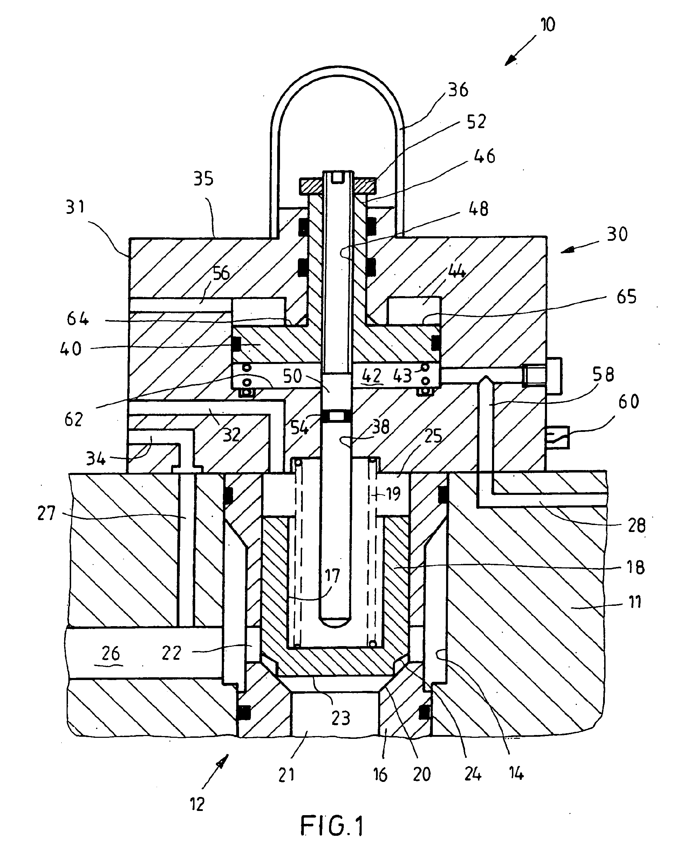

Nach Figur 1 umfasst ein sogenanntes Logikventil, also ein 2/2-Wege-Einbauventil 10, einen Einbausatz 12, welcher in eine Einbaubohrung 14 eines Ventilblocks 11 eingesetzt ist, und einen Steuerdeckel 30, welcher die Einbaubohrung 14 und den darin eingesetzten Einbausatz 12 abdeckt. Ein Fluidkanal 26 im Ventilblock 11 mündet seitlich in die Einbaubohrung 14. Ein weiterer Fluidkanal (nicht dargestellt) im Ventilblock 11 mündet in einen Bodenbereich der Einbaubohrung 14.

Der Einbausatz 12 umfasst eine Hülse 16. In der Hülse 16 ist ein Schließkegel 18 beweglich geführt. Der Schließkegel 18 besitzt eine sacklochartige Vertiefung 17. Darin ist eine Feder 19 eingesetzt. Die Feder 19 stützt sich weiterhin am Steuerdeckel 30 ab und beaufschlagt den Schließkegel 18 in Richtung einer in der Hülse 16 gebildeten Sitzfläche 20. Mit dem Schließkegel 18 ist eine fluidische Verbindung zwischen der stirnseitigen Öffnung 21 und den radialen Bohrungen 22 der Hülse 16 steuerbar. Eine Steuerfläche 23 am Schließkegel 18 ist durch den Druck in der Öffnung 21 mit einer Kraft in Öffnungsrichtung des Schließkegels 18 beaufschlagt. Eine weitere Steuerfläche 24 ist durch den in den Bohrungen 22 anstehenden Druck mit einer Kraft in Öffnungsrichtung beaufschlagt. Abseitig der Stirnöffnung 21 begrenzen die Hülse 16, der Schließkegel 18 und der Steuerdeckel 30 einen Federraum 25. Durch einen in dem Federraum 25 anstehenden Steuerdruck ist der Schließkegel 18 an seiner der Öffnung der Einbaubohrung 14 zugewandten Rückenfläche in Schließrichtung beaufschlagbar.

In dem Steuerdeckel 30 ist ein Steuerfluidkanal 32 vorgesehen, der von einer Anschlussfläche 31 des Steuerdeckels 30 in den Federraum 25 führt. Weiterhin verläuft ein Steuerfluidentnahmekanal mit den Kanalabschnitten 27 und 34 aus dem Fluidkanal 26 an die Anschlussfläche 31. Im Steuerdeckel 30 ist des Weiteren ein zylinderförmiger Hohlraum gebildet. Dieser wird durch einen Kolben 40 in einen dem Ventilblock 11 zugewandten Ringraum 42 und einen dem Ventilblock 11 abgewandten Ringraum 44 unterteilt. Den Ringraum 44 begrenzt der Kolben mit einer Steuerfläche 65. Im Ringraum 44 bildet eine kreisringförmige Erhebung 64 einen oberen Anschlag des Kolbens 40. Die Bodenfläche 62 des Ringraums 42 bildet einen unteren Anschlag des Kolbens 40. Der Kolben 40 setzt sich in eine Kolbenstange 46 fort, die an der dem Ventilblock 11 abgewandten Außenfläche 35 aus dem Steuerdeckel herausgeführt ist. Über der Durchführung der Kolbenstange 46 ist die abnehmbare Abdeckkappe 36 angeordnet.

Durch die Kolbenstange 46 und den Kolben 40 verläuft eine axiale Bohrung 48. Die Bohrung 48 ist mit einem Gewinde versehen. In die Bohrung 48 ist ein Stift 50 eingeschraubt. Der Stift 50 ist an einem dem Ventilblock 11 abgewandten Abschnitt mit einem Gewinde versehen, durch das er in der Bohrung 48 befestigt ist. Eine Sicherungsmutter 52 sichert die Einschraubposition des Stifts 50. Der Stift 50 ist durch eine Bohrung 38 im dem Ventilblock 11 zugewandten Abschnitt des Steuerdeckels 30 in den Federraum 25 geführt. Die Durchführung des Stifts 50 vom Ringraum 42 in den Federraum 25 ist durch eine Dichtung 54 gegen ein Überströmen von Druckmittel gesichert. Mit einem Positionsschalter 60 ist die Position des Stifts 50 erfassbar.

Vom Ringraum 44 führt der Steuerfluidkanal 56 zur Anschlussfläche 31. Der Ringraum 42 ist an den Steuerfluidkanal 58 angeschlossen. Dieser ist im Ventilblock 11 durch den Steuerfluidkanal 28 fortgeführt. Im Ringraum 42 ist eine Feder 43 angeordnet, die den Kolben 40 mit einer vom Ventilblock 11 weg gerichteten Kraft beaufschlagt.

Im Folgenden soll die Funktion des erfindungsgemäßen Ventils 10 dargestellt werden. Mit dem Schließkegel 18 wird die fluidische Verbindung zwischen der Öffnung 21 und den radialen Bohrungen 22 in der Hülse 16 gesteuert. Der Durchflussquerschnitt, der vom Schließkegel 18 freigegeben wird, hängt vom Hub des Schließkegels 18 gegenüber der Sitzfläche 20 ab. Durch Beaufschlagung des Federraums 25 mit einem Steuerdruck wird der Schließkegel 18 in an sich bekannter Weise gesteuert. Dazu wird auf das bereits genannte Lehrbuch "Der Hydrauliktrainer Band 4, Technik der 2-Wege-Einbauventile" verwiesen. Durch die Anordnung der Feder 19 ist das dargestellte Ventil 10 in der unbetätigten Normalstellung geschlossen.

Der Kolben 40 lässt sich im Steuerdeckel 30 zwischen seinen zwei durch das Steuerdeckelgehäuse gebildeten Endanschlägen 62 und 64 verfahren. Die Feder 43 verschiebt den Kolben 40 bei entlasteten Ringraum 44 an den Endanschlag 64. Durch eine Druckbeaufschlagung des Ringraums 44 lässt sich der Kolben 40 gegen die Wirkung der Feder 43 an den Endanschlag 62 verschieben.

Der Hub des Schließkegels 18 wird dadurch begrenzt, dass die Bodenfläche der Sacklochvertiefung 17 am Stift 50 zum Anschlag kommt. Durch die Position des Kolbens 40 ist vorgegeben, wie weit der Stift 50 in den Federraum 25 vorsteht. Liegt der Kolben 40 an dem Endanschlag 62 an, ist der Hub, den der Schließkegel 18 ausführen kann, minimal. Die Begrenzung des Hubs resultiert in einer Begrenzung des Durchflussquerschnitts, den der Schließkegel 18 höchstens freigeben kann. Durch Verstellen des Stifts 50 in der Bohrung 48 lässt sich der Hub, den der Schließkegel 18 bei dieser Position des Kolbens 40 maximal ausführen kann und somit der höchstens über den Ventilsitz erzielbare Durchflussquerschnitt einjustieren.

Wird der Steuerdruckraum 44 druckentlastet, so kehrt der Kolben 40 unter der Wirkung der Feder 43 an seinen dem Einbausatz 12 abgewandten Anschlag 64 zurück. Dementsprechend wird der Stift 50 aus dem Federraum 25 zurückgezogen. Bei dieser Position des Kolbens 40 bzw. des Stifts 50 kann das Schließglied 18 einen größeren Hub ausführen. Eine Begrenzung des Durchflussquerschnitts am Ventilsitz fällt wesentlich geringer aus, bzw. ist nicht gegeben. Dies trifft insbesondere dann zu, wenn der Stift 50 bei Anliegen des Kolbens 40 am Anschlag 64 nur soweit in den Federraum 25 vorsteht, dass der Hub des Schließkegels 18 durch die ihm zugewandte Fläche des Steuerdeckels 30 anstatt durch den Stift 50 begrenzt ist. Dies kann konstruktiv durch einen entsprechend langen Hub des Kolbens 40 gewährleistet werden.

Die Position des Stifts 50 und der entsprechende, höchstens erzielbare Hub des Schließkegels 18 ist also willkürlich durch die Ansteuerung des Ringraums 44 mit Steuerfluid verstellbar. Der Ringraum 42 ist durch die Kanäle 58 und 28 mit einer Steuerfluidrücklaufleitung verbunden. Es könnte jedoch auch der Ringraum 42 mit Steuerfluid druckbeaufschlagt werden. Der Kolben 40 kann z.B. durch einen im Ringraum 42 kontinuierlich anstehenden Druck hydraulisch in Richtung des Anschlags 64 vorgespannt sein.

Die Steuerfläche 65 am Kolben 40 ist größer als die Summe der Steuerflächen 23 und 24 am Schließkegel 18. So ist gewährleistet, dass der Kolben 40 durch hydraulische Druckbeaufschlagung des Ringraums 44 sicher am Anschlag 62 gehalten werden kann, auch wenn der Schließkegel 18 am Stift 50 anliegt und eine auf die Steuerflächen 23 und/oder 24 einwirkende hydrostatische Gegenkraft auf den Kolben 40 überträgt.

Die Anordnung aus dem Kolben 40 und dem Stift 50 lässt sich auch dazu verwenden, um ein Schließen des Schließkegels 18 zu unterstützen. Insbesondere kann die Geschwindigkeit der Schließbewegung gesteigert werden. Wird der Kolben 40 vom Anschlag 64 an den Anschlag 62 gefahren und liegt der Schließkegel 18 dabei am Stift 50 an, so wird er von der Ausfahrbewegung des Stifts 50 mitgenommen, bis der Kolben 40 am Anschlag 62 anliegt. Ein verbleibender Hub des Schließkegels 18 ist üblicherweise sehr gering. Dieser wird aufgrund der Massenträgheit des sich in Schließrichtung bewegenden Schließkegels 18 und durch die Wirkung der Feder 19 schnell geschlossen. Des Weiteren kann der Stift 50 so eingestellt werden, dass er bei geschlossenen Schließkegel 18 und einer in Richtung des Schließkegels 18 gerichteten Druckbeaufschlagung des Kolbens 40 am Schließkegel 18 anliegt, bevor oder gerade wenn der Kolben 40 seinen Anschlag 62 erreicht. Auf diese Weise wird durch die Druckbeaufschlagung der Steuerfläche 65 des Kolbens 40 eine in Schließrichtung des Schließkegels 18 wirkende Kraft verstärkt. Insbesondere kann die Kraft, mit der der Schließkegel 18 auf der Sitzfläche 20 aufliegt, erhöht werden. Dadurch können die Abdichtungseigenschaften in der geschlossenen Ventilstellung verbessert werden. Außerdem kann das Ventil 10 auch gegen einen Druck im Anschluss 21 oder 22 zuverlässig geschlossen gehalten werden, der den zur Verfügung stehenden Steuerdruck zur Beaufschlagung des Federraums 19 übersteigt.

Durch den Positionsschalter 60 wird die Position des Stifts 50 mechanisch erfasst. Der Positionsschalter 60 ist nur schematisch dargestellt. Eine geeignete Ausgestaltung ist z.B. ein Mikroschalter, der durch einen am Stift 50 befestigten Teller betätigt wird. So kann z.B. erfasst werden, ob der Stift 50 weit genug aus dem Federraum 19, zurückgezogen ist, um einen Durchflussquerschnitt des Ventils 10 nicht nennenswert zu beschränken. Es kann also überprüft werden, ob eine volle Öffnung des Ventils 10 zur Verfügung steht. Ein Klemmen des Stifts 50 wird sicher erkannt. Dadurch lassen sich Anforderungen aus Unfallverhütungsvorschriften erfüllen.

Die Position des Stifts 50 kann ebenfalls und ggf. zusätzlich mit einem Wegsensor erfasst werden. Zum Einen kann dadurch die zuverlässige Funktion des Ventils 10 überprüft werden. Zum Anderen kann die Lage des Stifts 50 einer Positionsregelung unterworfen werden. Die entsprechende Regelschleife umfasst den Wegsensor des Stifts, einen Regler, ein Proportionalventil, das den Steuerdruckraum 44 und ggf. 42 ansteuert, und den Kolben 40. Dadurch lassen sich beliebige Anschlagspositionen für den Schließkegel 18 mit hoher Genauigkeit vorgeben. Insbesondere sind die Anschlagspositionen nicht mehr dadurch beschränkt, dass sie durch die Lage der zwei Anschläge 62 und 64 des Kolbens 40 vorgegeben sind. Es können stattdessen beliebige Positionen innerhalb des Bewegungsspielraums des Kolbens 40 vorgegeben werden. Die Justierung kann außerdem rein elektronisch mittels der Sollwertvorgabe erfolgen. Ein Verstellen des Stifts 50 innerhalb der Bohrung 48 entfällt. Durch eine solche Ansteuerung lässt sich im Übrigen mit dem 2/2-Wege-Einbauventil 10 ein Ventilverhalten realisieren, das dem eines vorgesteuerten Proportionalventils entspricht, da sich die Ventilöffnung willkürlich und stetig steuern lässt.

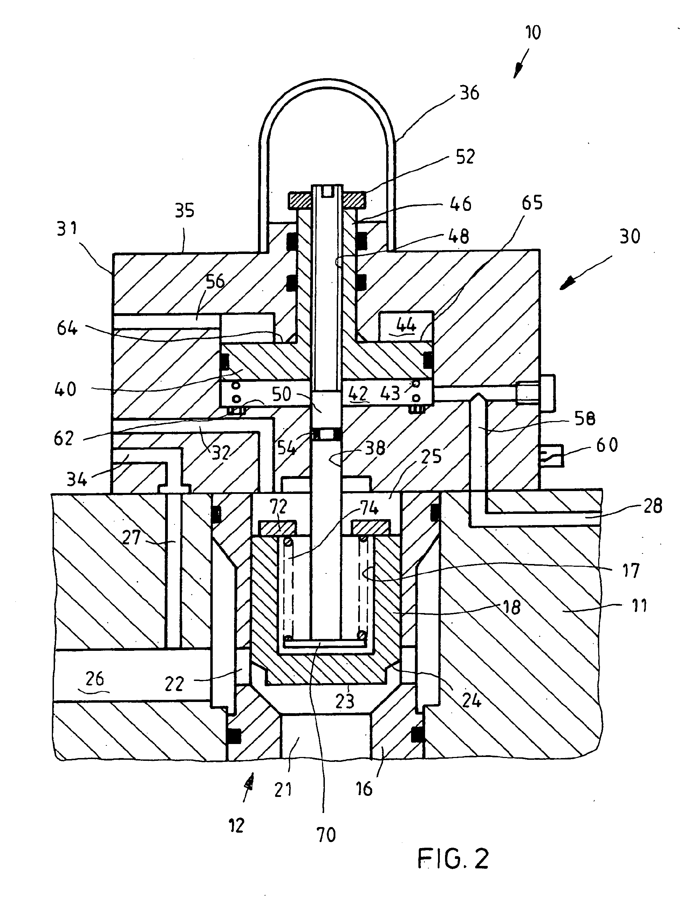

Das in Figur 2 dargestellte 2/2-Wege-Einbauventil 10 entspricht weitestgehend dem in Figur 1 dargestellten 2/2-Wege-Einbauventil. Es werden daher für übereinstimmende Bestandteile gleiche Bezugszeichen verwendet und auf eine Wiederholung der entsprechenden Beschreibung verzichtet.

Das in Figur 2 dargestellte 2/2-Wege-Einbauventil 10 ist im Gegensatz zum vorangehenden Ausführungsbeispiel in der Neutralstellung geöffnet. Dazu ist am Stift 50 ein Teller 70 vorgesehen, an dem sich eine Feder 74 abstützt. Die Feder 74 liegt an einem am Schließkegel 18 befestigten Ring 72 an. Die Art der Befestigung des Rings 72 am Schließkegel 18 ist nicht näher dargestellt. Es kann sich z.B. um eine Schraubverbindung, ein Einpressen, eine Klebeverbindung oder eine Schweißverbindung handeln.

Die am Ring 72 anliegende Feder 74 beaufschlagt den Schließkegel 18 mit einer in Öffnungsrichtung wirkenden Kraft. Falls der Federraum 25 druckentlastet ist, bewegt sich der Schließkegel 18 in Öffnungsrichtung, bis er am Stift 50 bzw. dem Teller 70 zur Anlage kommt. Wie bei dem ersten Ausführungsbeispiel lässt sich der höchstens erzielbare Öffnungshub des Schließkegels 18 durch die Länge, mit der der Stift 50 in den Federraum 25 vorsteht einstellen. Die diesbezüglich in Bezug auf das erste Ausführungsbeispiel beschriebenen Merkmale und Wirkungen treffen unverändert auf das zweite Ausführungsbeispiel zu.

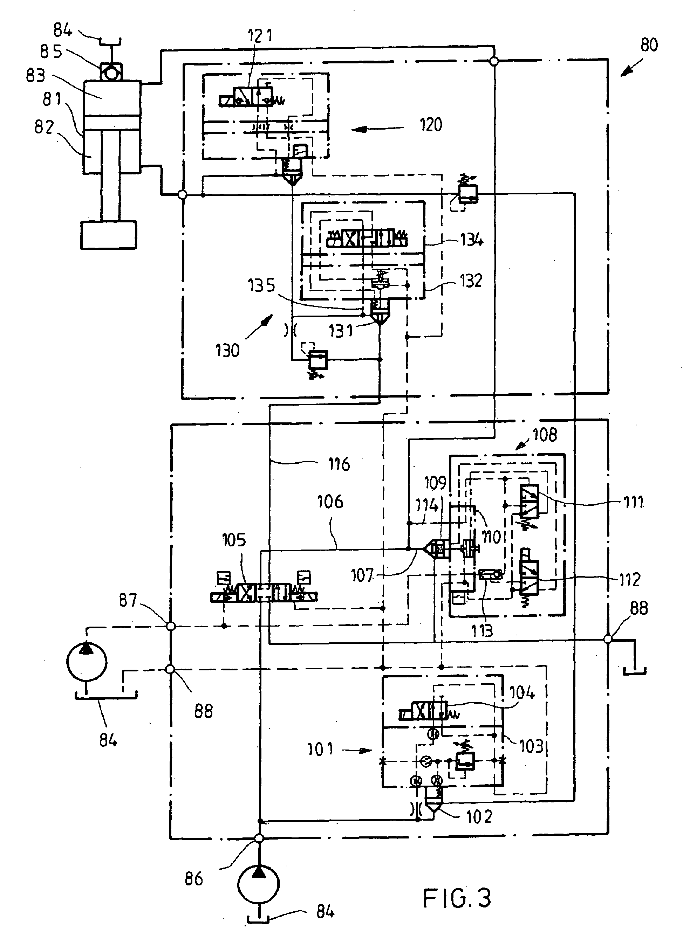

Die Figur 3 zeigt eine Anwendung der in Fig. 1 und Fig. 2 beschriebenen 2/2-Wege-Einbauventile am Beispiel einer einfachen Pressensteuerung 80. Mit der Pressensteuerung 80 wird ein Pressenzylinder 81 angesteuert. Der Pressenzylinder 81 besitzt einen mit einer Kolbenstange versehenen Kolben, der den Zylinderinnenraum in einen Ringraum 82 und einen Zylinderraum 83 unterteilt. Der Zylinderraum 83 ist über ein Nachsaugventil 85 mit einem Tank 84 verbunden. Die grundsätzliche Funktion einer Pressensteuerung ist im bereits erwähnten Datenblatt RD 63147/01.94 der Firma Bosch Rexroth AG beschrieben. Im Folgenden werden vor allem die Besonderheiten, die sich bei Einsatz der erfindungsgemäßen Ventile nach dem ersten und zweiten Ausführungsbeispiel ergeben, näher beschrieben.

Die Pressensteuerung 80 umfasst einen Anschluss 86 für die Hauptdruckversorgung sowie einen Anschluss 87 für die Steuerdruckversorgung. Über Tankanschlüsse 88 ist Druckmittel abführbar. Vom Pumpenanschluss 86 führt ein erster Abzweig zu einer ersten Ventilanordnung 101. Die Ventilanordnung 101 besteht aus einem Einbausatz 102 und einem Steuerdeckel 103. Im Steuerdeckel 103 ist ein Druckbegrenzungsventil vorgesehen, mit dem der Druck im Federraum des Einbausatzes 102 begrenzt wird. Außerdem kann über ein Schaltventil 104 der Federraum zum Tank entlastet werden. Die Ventilanordnung 101 besitzt dementsprechend die Funktion eines vorgesteuerten Druckbegrenzungsventils zur Absicherung des Pumpenanschlusses 86 sowie die Funktion eines Schaltventils zum Schalten eines drucklosen Umlaufs.

Ein weiterer Abzweig führt vom Pumpenanschluss 86 zu einem 4/3-Wegeventil 105. Dieses Ventil dient zur Richtungssteuerung des Pressenzylinders 81. Von einem ersten Verbraucheranschluss des Ventils 105 verläuft ein Fluidpfad 106 zum Zylinderraum 83 des Pressenzylinders 81. Von dem Fluidpfad 106 führt ein Abzweig 107 über eine weitere Ventilanordnung 108 zum Tank. Die Ventilanordnung 108 entspricht hinsichtlich ihres Einbausatzes 109 und ihres Steuerdeckels 110 dem 2/2-Wege-Einbauventil 10 gemäß dem zweiten Ausführungsbeispiel (vgl. Fig. 2). Am Steuerdeckel 110 sind zwei Vorsteuerventile 111 und 112 angeschlossen. Ein Wechselventil 113 wählt für die Versorgung des Vorsteuerventils 112 zwischen einem internen Steuerfluidabgriff 114 aus den Fluidpfad 106 und einer externen Steuerdruckversorgung. Über das elektrisch betätigbare Vorsteuerventil 112 wird der Federraum 25 (vgl. Fig. 2) des Einbausatzes 109 wahlweise mit Steuerdruck oder mit Tank verbunden. Dementsprechend schaltet der Einbausatz 109 bei Betätigung des Vorsteuerventils 112 von einer geöffneten Normalstellung in eine geschlossene Stellung. Das Vorsteuerventil 111 ist von einer Feder in Richtung einer ersten Schaltstellung beaufschlagt, in der es den Druckraum 44 (vgl. Fig. 2) des im Steuerdeckel 110 angeordneten Kolbens 40 zum Tank entlastet. In dieser Schaltstellung liegt der Kolben 40 (vgl. Fig. 2) am Anschlag 64 an. Ein im Steuerfluidabgriff 114 anstehender Druck beaufschlagt das Vorsteuerventil 111 in Richtung einer zweiten Schaltstellung, in der der Druckraum 44 (vgl. Fig. 2) mit Steuerfluid aus dem Steuerfluidabgriff 114 beaufschlagt ist. In dieser zweiten Schaltstellung des Vorsteuerventils 111 liegt der Kolben 40 (vgl. Fig. 2) am Anschlag 62 an.

Über die Vorsteuerventile 112 und 111 wird die Dekompression des Zylinderraums 83 nach einem Pressvorgang gesteuert. Während des Pressvorgangs ist das Vorsteuerventil 112 betätigt, und der Einbausatz 109 befindet sich in der geschlossenen Ventilstellung. Wird die Betätigung des Vorsteuerventils 112 beendet, kann der Schließkegel des Einbausatzes 109 (vgl. 18 in Fig. 2) öffnen und der Dekompressionsvorgang setzt ein. Das Vorsteuerventil 111 steuert den Ablauf der Dekompression automatisch. Zunächst steht der volle Pressdruck am Steuerfluidabgriff 114 an. Dementsprechend befindet sich das Vorsteuerventil 111 in der zweiten Schaltstellung. Der Kolben 40 (vgl. Fig. 2) liegt am Anschlag 62 an. Der Stift 50 (vgl. Fig. 2) steht weit in den Federraum 25 vor und begrenzt die Öffnung des Schließkegels 18 auf einen geringen Durchflussquerschnitt. Über den geringen Durchflussquerschnitt dekomprimiert das im Zylinderraum 83 vorhandene Fluid langsam. Dekompressionsschläge werden verhindert. Die Ablaufgeschwindigkeit des Druckmittels aus dem Zylinderraum 83 lässt sich durch Justieren der Einschraubtiefe des Stifts 50 (vgl. Fig. 2) in der Bohrung 48 festgelegen.

Sobald der Druck im Fluidpfad 106 unter einen Wert gefallen ist, der dem Druckäquivalent der Feder des Vorsteuerventils 111 entspricht - z.B. 50 bar -, schaltet das Vorsteuerventil 111 in die erste Schaltstellung und entlastet den Druckraum 44 (vgl. Fig. 2). Daraufhin wird der Stift 50 (vgl. Fig. 2) entsprechend der Bewegung des Kolbens 40 aus dem Federraum 25 zurückgezogen und das Ventil 108 gibt einen großen Durchflussquerschnitt zum schnellen Abbau des im Zylinderraum 83 vorhandenen Restdrucks frei.

Gleichzeitig dient die Ventilanordnung 108 als Sicherheitsventil. Ein Druck im Zylinderraum 83 des Pressenzylinders 81 kann nur aufgebaut werden, wenn zum Einen durch Betätigung des Vorsteuerventils 112 die Ventilanordnung 108 geschlossen ist und zum Anderen durch Betätigung des Schaltventils 104 die Ventilanordnung 101 den drucklosen Umlauf unterbindet. Während des Betriebs wird zudem überwacht, dass der Stift 50 (vgl. Fig. 2) der Ventilanordnung 108 die Öffnung des Schließkegels nur während der Dekompressionsphase und ggf. der Pressphase begrenzt. Dazu ist ein Endschalter (vgl. 60 in Fig. 2) vorhanden, der eine zurückgezogene Stellung des Stifts 50 (vgl. Fig. 2) erfasst.

Der Ringraum 82 des Pressenzylinders 81 ist durch einen Fluidpfad 116, der in Reihe über die Ventilanordnungen 120 und 130 verläuft, mit dem zweiten Verbraucheranschluss des Wegeventils 105 verbunden. Die Ventilanordnung 120 hat die Funktion eines entsperrbaren Rückschlagventils. Die Entsperrung erfolgt durch Betätigung des Vorsteuerventils 121.

Die Ventilanordnung 130 entspricht mit ihrem Einbausatz 131 und ihrem Steuerdeckel 132 dem Ventil 10 gemäß Figur 1. An den Steuerdeckel 132 ist ein 4/3-Wege-Vorsteuerventil 134 angeschlossen. Dieses lässt sich elektrisch betätigen. In der Neutralstellung des Vorsteuerventils 134 ist der Druckraum 44 (vgl. Fig. 1) und der Federraum 25 mit dem Steuerfluidabgriff 135 der Ventilanordnung 130 verbunden. Dementsprechend wirkt die Ventilanordnung 130 als Rückschlagventil. Ein Druckmittelfluss in Richtung des Druckraums 82 ist nicht vorgesehen und könnte allenfalls gedrosselt erfolgen.

In einer ersten betätigten Stellung (links) des Vorsteuerventils 134 ist der Federraum 25 (vgl. Fig. 1) mit dem Steuerfluidabgriff 135 und gleichzeitig der Druckraum 44 (vgl. Fig. 1) mit dem Tank verbunden. Dabei wirkt die Ventilanordnung 130 als Rückschlagventil. Der Kolben 40 (vgl. Fig. 1) befindet sich an seinem Anschlag 64. Der Schließkegel 18 (vgl. Fig. 1) kann einen großen Durchflussquerschnitt freigeben. Diese Ventilstellung des Vorsteuerventils 134 ist während einer Rückzugsphase der Kolbenstange des Pressenzylinders 81 geschaltet. Über die Ventilanordnungen 130 und 120 erfolgt eine verlustarme Zufuhr von Fluid in den Ringraum 82.

In der zweiten betätigten Stellung (rechts) des Vorsteuerventils 134 ist bei der Ventilanordnung 130 der Federraum 25 (vgl. Fig. 1) mit dem Tank und gleichzeitig der Druckraum 44 (vgl. Fig. 1) mit dem Steuerfluidabgriff 135 verbunden. Der Schließkegel 18 (vgl. Fig. 1) ist somit entsperrt und öffnet bei Druckbeaufschlagung an beiden Anschlüssen des Einbausatzes 131 (vgl. 21 und 26 in Fig. 1). Der freigebbare Durchflussquerschnitt ist allerdings in Folge der Druckbeaufschlagung des Druckraums 44 (vgl. Fig. 1) eingeschränkt. Diese zweite Stellung des Vorsteuerventils 134 wird betätigt, wenn der Kolben des Pressenzylinders 81 im Eilgang unter Eigengewicht abgesenkt werden soll. Gleichzeitig ist durch Betätigung des Vorsteuerventils 121 die Ventilanordnung 120 zu entsperren. Die Absenkgeschwindigkeit des Pressenzylinderkolbens kann durch Justieren der Einschraubtiefe des Stifts 50 (vgl. Fig. 1) in der Bohrung 48 festgelegt werden.

Durch das Hintereinanderschalten der zwei Ventilanordnungen 120 und 130 ist gewährleistet, dass ein technischer Defekt einer Ventilanordnungen nicht zu einem unkontrollierten Absenken des Pressenzylinderkolbens führt. Die Stellung des Schließkegels der Ventilanordnung 120 wird zusätzlich durch einen Endschalter überwacht. Die Ventilanordnung 130 verkörpert die Funktion eines entsperrbaren Rückschlagventils, mit einer im entsperrten Zustand zugeschalteten Durchflussbegrenzung.

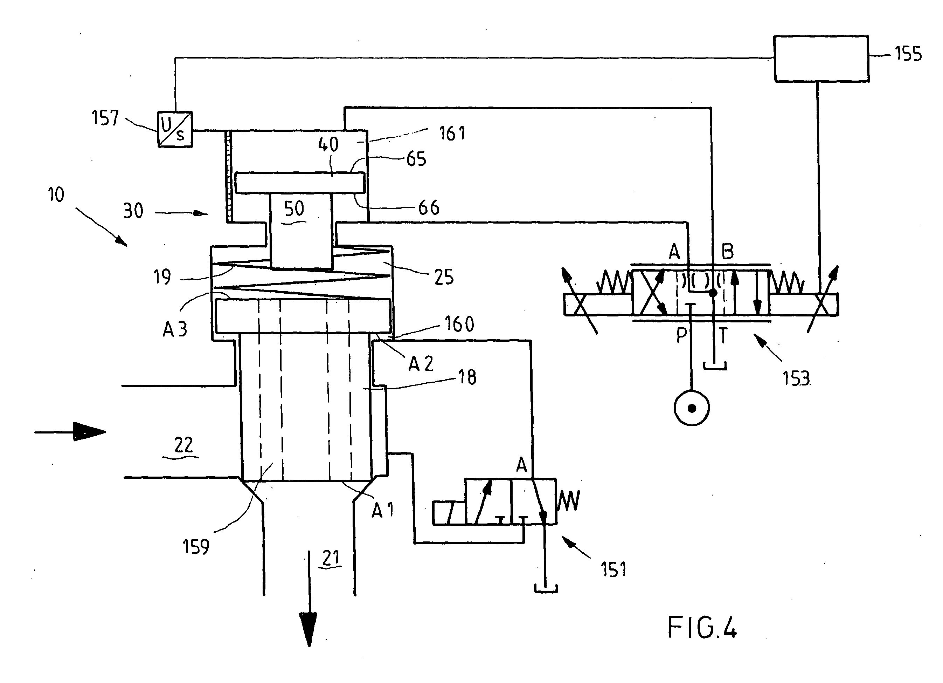

Gemäß einem Ausführungsbeispiel der vorliegenden Erfindung ist in Figur 4 ein 2/2-Wege-Einbauventil 10 dargestellt. Das 2/2-Wege-Einbauventil 10 gemäß dem Ausführungsbeispiel besitzt einen Schließkegel 18 in Form eines gestuften Kolbens.

Dieser Schließkegel 18 steuert die Verbindung zwischen dem Anschluss 22 und dem Anschluss 21. Am Schließkegel 18 sind drei Steuerflächen A1, A2 und A3 vorhanden. Die Steuerflächen A1 und A3 sind durch die jeweiligen Stirnflächen des Schließkegels gebildet. Die Steuerfläche A2 ist die an einer Kolbenstufe gebildete Ringfläche. Die Steuerfläche A1 ist dem Anschluss 21 zugewandt, die Steuerfläche A3 begrenzt den Federraum 25. Die Steuerfläche A2 begrenzt einen unabhängig ansteuerbaren Steuerraum 160, der durch ein Schaltventil 151 mit einem Steuerdruck beaufschlagbar ist.

Durch den Schließkegel 18 führen Kanäle 159, die die beiden an die Stirnflächen A1 und A3 angrenzenden Räume verbinden. Im Federraum 25 herrscht somit der Druck, der auch im Anschluss 21 ansteht. Die Feder 19 beaufschlagt den Schließkegel 18 in Schließrichtung. Die Summe der Flächen A1 und A2 entspricht der Fläche A3.

Im Steuerdeckel 30 des 2/2-Wege-Einbauventils ist ein verstellbarer Anschlag vorgesehen. Dieser besteht im Wesentlichen aus einer Kolben-Zylinderanordnung des Kolbens 40, der in einem zylindrischen Einbauraum 161 beweglich geführt ist. Von dem Kolben 40 nach Art einer Kolbenstange ausgehend steht der Stift 50 in den Federraum 25 vor. Der Kolben 40 ist an einer Kreisfläche 65 und an einer Ringfläche 66 mit einem Steuerdruck beaufschlagbar.

Die Position des Kolbens 40 lässt sich durch einen Positionssensor 157 erfassen. Der Positionswert ist einer Regelelektronik 155 zugeführt. Mittels eines Proportionalventils 153 lassen sich die Steuerflächen 65 und 66 des Kolbens 40 ansteuern. Das Proportionalventil 153 wird seinerseits von der Regelelektronik 155 angesteuert. Mittels des durch die Regelelektronik 155, das Proportionalventil 153, den Kolben 40 und den Positionssensor 157 gebildeten Regelkreis lässt sich der Stift 50 lagegeregelt verstellen.

Mit dem Schaltventil 151 lässt sich eine Verbindung zwischen dem Anschluss 22 und dem Steuerdruckraum 160 zur Beaufschlagung der Steuerfläche A2 herstellen. In der unbetätigten Stellung des Schaltventils 151 ist der Steuerdruckraum 160 druckentlastet.

Das in Figur 4 dargestellte 2/2-Wege-Einbauventil 10 lässt sich sehr schnell - innerhalb weniger Millisekunden - auf einen durch den verstellbaren Anschlag 40, 50 vorgegebenen Öffnungsquerschnitt öffnen. Eine bevorzugte Anwendung ist die Steuerung des Zulaufs zu einem Gießzylinder einer Druckgussmaschine (Warmkammerdruckgussmaschine, Kaltkammerdruckgussmaschine), einer Tixomouldingmaschine, einer Kunststoffspritzgießmaschine oder ähnlichen Maschinen, bei denen flüssiges Formmaterial in eine Form eingebracht werden muss. Dabei ist der Anschluss 22 als Eingangsanschluss an einen Niederdruckspeicher angeschlossen. Der Anschluss 21 ist als Ausgang mit dem Gießzylinder verbunden. Der Einsatz eines ähnlich aufgebauten 2/2-Wege-Einbauventils, jedoch ohne einen verstellbaren Anschlag 40, 50 ist in der Patentanmeldung DE 10 2005 035 170.0 beschrieben. Hinsichtlich des Ablaufs des Gießvorgangs und der Rückschlagfunktion des 2/2-Wege-Einbauventils 10 wird auf die genannte Anmeldung verwiesen.

Eine kritische Phase beim Druckgussvorgang ist die Beschleunigung des Gießzylinders auf eine vorgegebene Geschwindigkeit zu Beginn der Schussphase. Durch den verstellbaren Anschlag 40, 50 kann vorab - d.h. vor der Schussphase - ein maximaler Öffnungsquerschnitt des Ventils 10 eingestellt werden. Zur Einleitung der Schussphase wird dann durch Betätigung des Schaltventils 151 der Schließkegel 18 sehr schnell auf die durch den Stift 50 vorgegebene Position geöffnet. Dadurch lässt sich der Gießzylinder innerhalb sehr kurzer Zeit auf eine genau vorgegebene Geschwindigkeit beschleunigen. Die Beschleunigungszeit liegt im Bereich von etwa 10-20 Millisekunden.

Dadurch lassen sich so genannte gesteuerte Druckgussmaschinen, bei denen die Geschwindigkeit des Gießzylinders über den Zulauf gesteuert wird, einfach, kostengünstig und mit hoher Genauigkeit realisieren. Die hydraulische, lagegeregelte Verstellung des Anschlags erlaubt eine zuverlässige Einstellung des Öffnungsgrades mit einer hohen Wiederholgenauigkeit. Die Verstellung lässt sich effizient von einem Bedienpult aus durchführen.

Schon durch die hydraulische Einspannung des Kolbens 40 ergibt sich eine Dämpfung, wenn der Schließkegel 18 am Stift 50 anschlägt. Die Dämpfungseigenschaften lassen sich durch die Regelparameter in der Regelelektronik 155 beeinflussen. Zusätzlich lässt sich die Dämpfung mittels einer hydraulischen Anschlagsdämpfung verbessern, die zwischen dem Schließkegel 18 und dem Stift 50 wirksam ist. Dazu kann z.B. ein an sich bekannter Dämpfungsmechanismus auf Grundlage einer hydraulischen Verdrängung Verwendung finden.

Das Ventil 10 kann auch als proportional verstellbare 2-Wege-Blende betrieben werden. Dazu wird der Raum 160 mit einem Steuerdruck beaufschlagt, so dass der Schließkegel 18 am Stift 50 anliegt. Über die lagegeregelte Verstellung des Stifts 50 mittels des Kolbens 40 kann nun der Öffnungsgrad beliebig und kontinuierlich eingestellt werden. Dadurch ist das Ventil 10 - ggf. in einer kleinen Nenngröße - auch geeignet, die Vorfüllphase einer Druckgussmaschine zulaufseitig zu steuern.

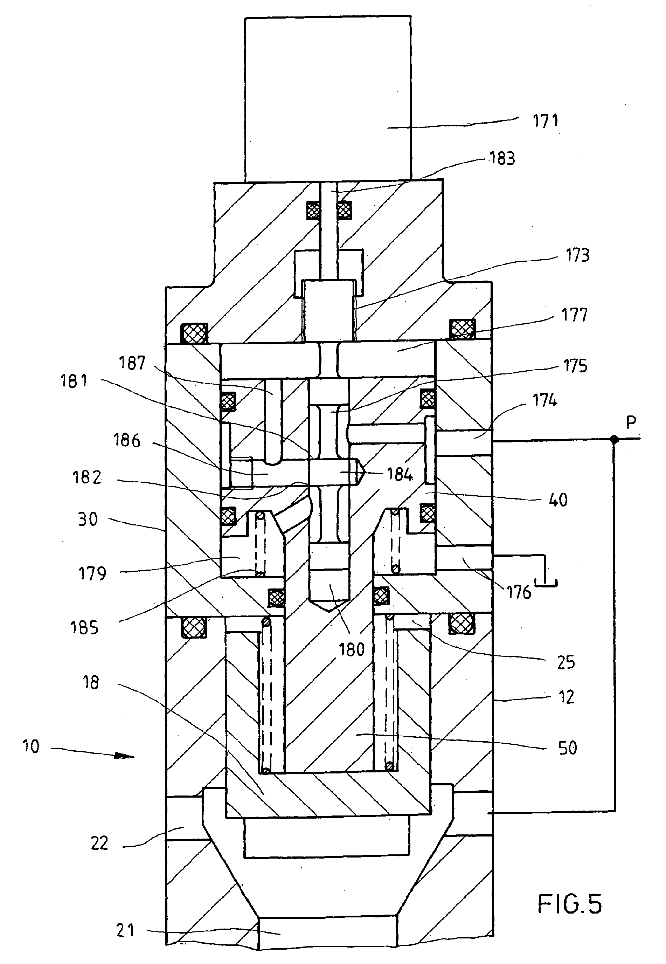

In Figur 5 ist ein 2/2-Wege-Einbauventil 10 mit einem verstellbaren Anschlagsstift 50 dargestellt. Das 2/2-Wege-Einbauventil 10 gemäß Fig. 5 unterscheidet vor allem durch die Bauart des verstellbaren Anschlags von den Einbauventilen gemäß den in Fig. 1 und Fig. 2 beschriebenen Ventilen. Daher wird im Folgenden lediglich der Anschlag beschrieben. Der verstellbare Anschlag gemäß diesem Ausführungsbeispiel lässt sich auch ohne Weiteres bei dem 2/2-Wege-Einbauventil 10 gemäß dem dritten Ausführungsbeispiel einsetzen.

Gemäß Figur 5 ist der maximale Öffnungshub des Schließkegels 18 durch den Anschlagsstift 50 vorgegeben. Der Stift 50 ist als Kolbenstange ausgeführt und schließt sich an den Kolben 40 an. Der Kolben 40 ist in einem Steuerdeckel 30 in einem Zylinderraum beweglich geführt und unterteilt den Zylinderraum in die beiden Druckräume 177 und 179. Der Kolben 40 ist mit einer zentralen, sacklochartigen Bohrung 180 versehen. In die Bohrung 180 steht ein Vorsteuerkolben 175 vor. Der Vorsteuerkolben 175 ist an einem Schraubgewinde 173 gelagert. Durch einen Elektromotor 171 lässt sich der Vorsteuerkolben 175 verdrehen und somit axial verstellen. Durch eine Längsverzahnung (nicht dargestellt) sind die Motorwelle 183 und der Vorsteuerkolben 175 axial entkoppelt.

Der Vorsteuerkolben 175 weist mehrere Erhebungen auf, durch die die Bohrung 180 in mehrere Kammern unterteilt ist. Eine der Kammern ist über eine Radialbohrung im Kolben 40 mit einem Steuerdruckanschluss 174 verbunden. Von dieser Kammer durch die Erhebung 184 getrennt, besteht eine weitere Kammer, welche über eine weitere Bohrung im Kolben 40 mit dem Druckraum 179 verbunden ist. Der Druckraum 179 steht mit einem Entlastungsanschluss 176 in Verbindung und nimmt außerdem die Stellfeder 185 auf. Zusammen mit einer Radialbohrung 186 im Kolben 40 bildet die Erhebung 184 zwei Steuerkanten 181 und 182 aus. Die Radialbohrung 186 ist über eine Axialbohrung 187 mit dem Druckraum 177 verbunden.

Der Kolben 40 ist mit dem Vorsteuerkolben 175 nach Art einer hydraulischen Folgesteuerung gekoppelt. Über die Steuerkanten 181 und 182 lässt sich dem Druckraum 177 Druckmittel zuführen oder Druckmittel daraus abführen. Solange entweder die Steuerkante 181 oder die Steuerkante 182 geöffnet ist, folgt der Kolben 40 dem Vorsteuerkolben wegen der Druckbeaufschlagung bzw. der Entlastung des Druckraums 177. Bei Erreichen der durch den Vorsteuerkolben 175 vorgegebenen Stellposition des Kolbens 40 stellt sich im Druckraum 177 bei weitgehend geschlossenen Steuerkanten 181 und 182 ein Druck ein, der die Kraft der Stellfeder 185 und gegebenenfalls eine durch den Schließkegel 18 auf den Stift 50 einwirkende Kraft kompensiert.

Die Steuerfläche, mit der der Kolben 40 den Druckraum 177 begrenzt, ist größer als die insgesamt in Öffnungsrichtung wirksame Fläche des Schließkegels 18. Dadurch kann auch bei einem hohen Druck in den Anschlüssen 21 und 22 des 2/2-Wege-Einbauventils 10 der Stift 50 in einer vorgegeben Position gehalten werden.

Der Elektromotor 171 und das Gewinde 173 sind nur einer geringen Belastung in axialer Richtung ausgesetzt, die vor allem durch Strömungskräfte an den Steuerkanten 181 und 182 hervorgerufen wird. Daher kann der elektrische Antrieb vergleichsweise schwach dimensioniert werden.

Die Lage des Stifts 50 bzw. des Kolbens 40 kann z.B. direkt durch einen am Kolben 40 angekoppelten Positionssensor erfasst werden. Alternativ kann durch einen Drehwinkelsensor am Motor auf die Lage des Stifts 50 geschlossen werden.

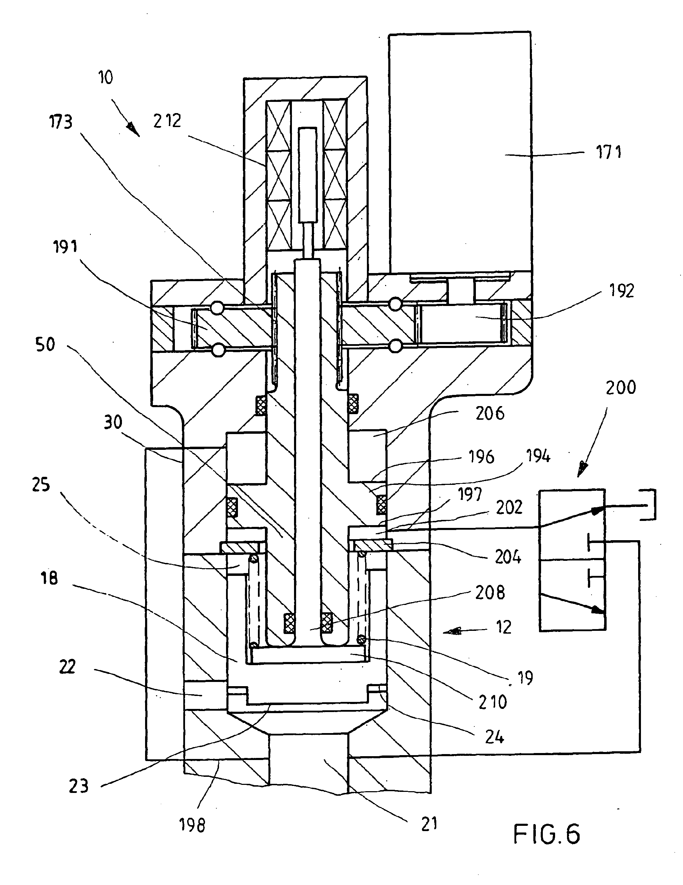

Eine weitere Bauform eines mithilfe eines elektrischen Antriebs verstellbaren Anschlags für ein Wegeventil ist im Folgenden anhand Figur 6 dargestellt. Der verstellbare Anschlag lässt sich ohne Weiteres bei den 2/2-Wege-Einbauventilen 10 gemäß den vorangehenden Figuren einsetzen.

Das 2/2-Wege-Einbauventil 10 gemäß Fig. 6 verfügt über einen Schließkegel 18, der die fluidische Verbindung zwischen den Anschlüssen 21 und 22 steuert. In den Federraum 25 steht der Stift 50 vor. Dieser ist als Kolbenstange ausgeführt und setzt an einen Kolben 194 an, welcher in einem Zylinderraum des Steuerdeckels 30 beweglich geführt ist. Entlang der Mittelachse des Stifts 50 verläuft eine axiale Bohrung. In der axialen Bohrung ist ein weiterer Stift 208 beweglich geführt. Der Stift 208 geht an seinem dem Schließkegel 18 zugewandten Ende in einen Tellerabschnitt 210 über. Der Tellerabschnitt 210 wird durch die Wirkung der Feder 19, die zwischen dem Tellerabschnitt 210 und einem Stützring 204 eingespannt ist, am Schließkegel 18 zur Anlage gebracht. Zusätzlich beaufschlagt die Feder 19 den Schließkegel 18 in Schließrichtung.

Der Stift 208 dient zur Kopplung des Schließkegels 18 mit einem Positionssensor 212. Der Positionssensor 212 ist koaxial in Verlängerung des Anschlagsstifts 50 an der dem Schließglied 18 abgewandten Seite des Steuerdeckels 30 angeordnet.

Der Stift 50 ist durch ein Gewinde 173 eines Gewindetriebs in axialer Richtung verstellbar. Über ein Übersetzungsgetriebe mit zwei Zahnrädern 191 und 192 ist der Stift 50 mit einem Elektromotor 171 gekoppelt. Das Übersetzungsgetriebe erlaubt eine seitlich versetzte Anordnung des Elektromotors 171 hinsichtlich der Achse des Stifts 50 und somit eine einfache Ankopplung des Positionssensors 212 an den Schließkegel 18.

Der am Stift 50 befindliche Kolben 194 begrenzt im Steuerdeckel 30 einen Ringraum 206. Der Ringraum 206 ist über einen Kanal 198 mit dem Anschluss 21 des Ventils 10 verbunden. Auf der Ringfläche 196 des Kolbens 194 herrscht somit der gleiche Druck wie im Anschluss 21.

Ein an der dem Schließkegel 18 zugewandten Ringfläche 197 des Kolbens 194 gebildeter Ringraum 202 steht über die zentrale Öffnung des Stützrings 204 mit dem Federraum 25 in fluidischer Verbindung. Über das Schaltventil 200 kann der Federraum 25 entweder mit dem Druck im Anschluss 21 beaufschlagt werden oder entlastet werden.

Ist der Federraum 25 druckentlastet, so öffnet der Schließkegel 18 unter Einwirkung eines Drucks auf seine Steuerflächen 23 oder 24, bis er am Anschlagsstift 50 anliegt. Die an den Steuerflächen 23 und 24 durch den hydrostatischen Druck auf den Stift aufgebrachten Kräfte werden durch den an der Ringfläche 196 anstehenden Druck zumindest teilweise kompensiert. Vorzugsweise entspricht die Ringfläche 196 der Steuerfläche 23. Dadurch wird der wesentliche Beitrag der axial auf den Stift 50 einwirkenden Kräfte, welcher vom Druck im Anschluss 21 her rührt, kompensiert.

Ist der Federrraum 25 über das Ventil 200 mit dem Druck im Anschluss 21 beaufschlagt, so schließt der Schließkegel 18 unter Einwirkung der Feder 19 und aufgrund des Flächenüberschusses der dem Federraum 25 zugewandten Steuerfläche des Schließkegels 18. Die insgesamt von Seiten des Federraums 25 auf den Stift 50 und den Kolben 40 einwirkenden Druckkräfte werden zu einem Teil durch die Druckbeaufschlagung der Ringfläche 196 des Kolbens 40 kompensiert.

Durch die Kompensation der in Richtung des Gewindes 173 auf den Stift 50 einwirkenden Axialkräfte unterliegen das Gewinde 173, die Lager des Übersetzungsgetriebes 191 und 192 und der Elektromotor 171 einer verringerten Belastung und können vergleichsweise schwach und somit kostengünstig ausgelegt werden.

### Bezugszeichenliste

- 10: 2/2-Wege-Einbauventil
- 11: Ventilblock
- 12: Einbausatz
- 14: Einbaubohrung
- 16: Hülse
- 17: Sacklochartige Vertiefung
- 18: Schließkegel
- 19: Feder
- 20: Sitzfläche
- 21: Stirnseitige Öffnung
- 22: Radialbohrung
- 23: Steuerfläche
- 24: Steuerfläche
- 25: Federraum
- 26: Fluidkanal
- 27: Kanalabschnitt
- 28: Steuerfluidkanal
- 30: Steuerdeckel
- 31: Anschlussfläche
- 32: Steuerfluidkanal
- 34: Kanalabschnitt
- 35: Außenfläche
- 36: Abdeckkappe
- 38: Bohrung
- 40: Kolben
- 42: Ringraum
- 43: Feder
- 44: Ringraum
- 46: Kolbenstange
- 48: Axiale Bohrung
- 50: Stift
- 52: Sicherungsmutter
- 54: Dichtung
- 56: Steuerfluidkanal
- 58: Steuerfluidkanal
- 60: Positionsschalter
- 62: Endanschlag
- 64: Endanschlag
- 65: Steuerfläche
- 66: Steuerfläche
- 70: Teller
- 72: Ring
- 74: Feder
- 80: Pressensteuerung
- 81: Pressenzylinder
- 82: Ringraum
- 83: Zylinderraum
- 84: Tank
- 85: Nachsaugventil
- 86: Anschluss Hauptdruckversorgung
- 87: Anschluss Steuerdruckversorgung
- 88: Tankanschlüsse
- 101: Ventilanordnung
- 102: Einbausatz
- 103: Steuerdeckel
- 104: Schaltventil
- 105: 4/3-Wegeventil
- 106: Fluidpfad
- 107: Abzweig
- 108: Ventilanordnung
- 109: Einbausatz
- 110: Steuerdeckel
- 111: Vorsteuerventil
- 112: Vorsteuerventil
- 113: Wechselventil
- 114: Steuerfluidabgriff
- 116: Fluidpfad
- 120: Ventilanordnung
- 121: Vorsteuerventil
- 130: Ventilanordnung
- 131: Einbausatz
- 132: Steuerdeckel
- 134: 4/3-Wege-Vorsteuerventil
- 135: Steuerfluidabgriff
- 151: Schaltventil
- 153: Proportionalventil
- 155: Regelelektronik
- 157: Positionssensor
- 159: Kanal
- 160: Steuerraum
- 161: Einbauraum
- 171: Elektromotor
- 173: Schraubgewinde
- 174: Steuerdruckanschluss
- 175: Vorsteuerkolben
- 176: Entlastungsanschluss
- 177: Druckraum
- 179: Druckraum
- 180: Bohrung
- 181: Steuerkante
- 182: Steuerkante
- 183: Motorwelle
- 184: Erhebung
- 185: Stellfeder
- 186: Radialbohrung
- 187: Axialbohrung
- 191: Zahnrad
- 192: Zahnrad
- 194: Kolben
- 196: Ringfläche
- 197: Ringfläche
- 198: Kanal
- 200: Schaltventil
- 202: Offener Ringraum
- 204: Stützring
- 206: Ringraum
- 208: Stift
- 210: Tellerabschnitt
- 212: Positionssensor

## Patentansprüche

1. Ventil mit zwei Fluidanschlüssen (21, 22) und mit einem beweglich geführten Schließglied (18), das zwischen einer ersten Stellung, in der es einen Durchflussquerschnitt zwischen den zwei Fluidanschlüssen (21, 22) freigibt, und einer zweiten Stellung, in der es eine fluidische Verbindung zwischen den zwei Fluidanschlüssen (21, 22) sperrt, schaltbar ist, und mit einem Anschlagsglied (50), durch das der durch das Schließglied (18) höchstens freigebbare Durchflussquerschnitt begrenzbar ist, wobei
das Anschlagsglied (50) durch eine fernbetätigbare Stellvorrichtung (30, 40) zwischen verschiedenen Anschlagspositionen verstellbar ist,
**dadurch gekennzeichnet, dass**
das Schließglied (18) als Stufenkolben ausgebildet ist, dass der Stufenkolben mit einer Ringfläche (A2) einen Ringraum begrenzt, und dass der Stufenkolben an der Ringfläche (A2) in Öffnungsrichtung mit einem Steuerdruck beaufschlagbar ist,
wobei am Stufenkolben zwei weitere Steuerflächen (A1, A3) an gegenüberliegenden Stirnseiten gebildet sind, dass beide Steuerflächen (A1, A3) von einem Druck in einem Ausgangsanschluss (21) beaufschlagt sind, und dass beide Steuerflächen (A1 und A3) insgesamt einen Flächenüberschuss im Sinne eines Sperrens der fluidischen Verbindung aufweisen,
wobei der Stufenkolben eine axiale Durchgangsbohrung (159) aufweist.

2. Ventil nach Anspruch 1, **dadurch gekennzeichnet, dass** die Stellvorrichtung (30, 40) ein mit dem Anschlagsglied (50) gekoppeltes Stellglied (40) aufweist, welches zwischen vorgegebenen Stellpositionen (62, 64) verfahrbar ist.

3. Ventil nach Anspruch 2, **dadurch gekennzeichnet, dass** der bei einer vorgegebenen Stellposition (62) höchstens freigebbare Durchflussquerschnitt justierbar ist.

4. Ventil nach Anspruch 3, **dadurch gekennzeichnet, dass** eine bei der vorgegebenen Stellposition (62) eingenommene Anschlagsposition des Anschlagsglieds (50) justierbar ist.

5. Ventil nach einem der Ansprüche 1 bis 4, **dadurch gekennzeichnet, dass** das Anschlagsglied (50) durch einen hydraulisch beaufschlagbaren Kolben (40) verstellbar ist.

6. Ventil nach Anspruch 5, **dadurch gekennzeichnet, dass** am Schließglied (18) eine Steuerfläche (23, 24) vorhanden ist, an der ein in einem der Fluidanschlüsse (21, 22) anstehender Druck das Schließglied (18) im Sinne einer Vergrößerung des Durchflussquerschnitts beaufschlagt, und dass eine Steuerfläche (65) des Kolbens (40), an der dieser im Sinne einer stärkeren Begrenzung des Durchflussquerschnitts beaufschlagbar ist, größer ist als die besagte Steuerfläche (23, 24) des Schließglieds (18).

7. Ventil nach Anspruch 5 oder 6, **dadurch gekennzeichnet, dass** das Ventil einen das Schließglied (18) umfassenden Einbausatz (12) und einen Steuerdeckel (30) aufweist, welcher eine den Einbausatz (12) aufnehmende Einbaubohrung (14) abdeckt, dass zwischen dem Schließglied (18) und dem Steuerdeckel (30) ein Federraum (25) gebildet ist, dass der Kolben (40) in einem zylindrischen Hohlraum (42, 44) im Steuerdeckel (30) beweglich geführt ist und dass das Anschlagsglied (50) vom Kolben (40) ausgehend in den Federraum (25) vorsteht.

8. Ventil nach Anspruch 7, **dadurch gekennzeichnet, dass** am Kolben (40) eine Kolbenstange (46) vorgesehen ist, welche an einer der Einbaubohrung (14) abgewandten Seite (35) des Steuerdeckels (30) nach außen geführt ist, dass der Kolben (40) und die Kolbenstange (46) mit einer durchgängigen Axialbohrung (48) versehen sind, und dass ein Stift (50) in die Axialbohrung (48) eingeschraubt ist und in den Federraum (25) vorsteht.

9. Ventil nach einem der Ansprüche 1 bis 8, **dadurch gekennzeichnet, dass** an dem Anschlagsglied (50) ein Teller (70) vorgesehen ist, an dem sich eine das Schließglied (18) im Sinne einer Vergrößerung des Durchflussquerschnitts beaufschlagende Feder (74) abstützt.

10. Ventil nach einem der Ansprüche 1 bis 9, **dadurch gekennzeichnet, dass** es in Sitzventilbauweise ausgeführt ist.

11. Ventil nach einem der Ansprüche 1 bis 10, **dadurch gekennzeichnet, dass** eine Messvorrichtung vorgesehen ist, mit der eine Position des Anschlagsglieds (50) erfassbar ist, insbesondere ein Wegsensor oder ein Endschalter (60).

12. Ventil nach einem der Ansprüche 1 bis 11, **dadurch gekennzeichnet, dass** das Anschlagsglied (50) als hydraulisches Stellglied ausgebildet ist, dass ein Wegsensor (157) zur Erfassung der Position des Anschlagglieds (50) vorhanden ist und dass das Anschlagsglied (50) einer Positionsregelung unterworfen ist.

13. Ventil nach einem der Ansprüche 1 bis 12, **dadurch gekennzeichnet, dass** zwischen dem Anschlagsglied (50) und dem Schließglied (18) eine hydromechanische Anschlagsdämpfung vorgesehen ist.

14. Hydraulische Steueranordnung zur Ansteuerung eines hydraulischen Verbrauchers mit einem Ventil nach einem der Ansprüche 1 bis 13.

15. Hydraulische Steueranordnung nach Anspruch 14, zur Steuerung einer fluidischen Verbindung zwischen einem Gießzylinder einer Kaltkammerdruckgussmaschine und einem Fluidspeicher unter Verwendung eines Ventils nach Ansprüche 12 oder 13.

## Claims

1. Valve having two fluid connectors (21, 22) and having a movably guided closing member (18) which can be switched between a first position, in which it opens a throughflow cross section between the two fluid connectors (21, 22), and a second position, in which it shuts off a fluidic connection between the two fluid connectors (21, 22), and having a stop member (50), by which the throughflow cross section which can be opened at most by the closing member (18) can be limited,
it being possible for the stop member (50) to be adjusted between various stop positions by an actuating apparatus (30, 40) which can be actuated remotely,
**characterized in that**
the closing member (18) is configured as a step piston, **in that** the step piston delimits an annular space by way of an annular face (A2), and **in that** the step piston can be loaded in the opening direction on the annular face (A2) with a control pressure,
two further control faces (A1, A3) being formed on the step piston on opposite end sides, **in that** both control faces (A1, A3) are loaded by a pressure in an outlet connector (21), and **in that** both control faces (A1 and A3) overall have an area excess in the direction of shutting off of the fluidic connection,
the step piston having an axial through hole (159).

2. Valve according to Claim 1, **characterized in that** the actuating apparatus (30, 40) has an actuating member (40) which is coupled to the stop member (50) and can be moved between predefined actuating positions (62, 64).

3. Valve according to Claim 2, **characterized in that** the throughflow cross section which can be opened at most in a predefined actuating position (62) can be adjusted.

4. Valve according to Claim 3, **characterized in that** a stop position, assumed in the predefined actuating position (62), of the stop member (50) can be adjusted.

5. Valve according to one of Claims 1 to 4, **characterized in that** the stop member (50) can be adjusted by a hydraulically loadable piston (40).

6. Valve according to Claim 5, **characterized in that** there is a control face (23, 24) on the closing member (18), on which control face (23, 24) a pressure which prevails in one of the fluid connectors (21, 22) loads the closing member (18) in the direction of an increase of the throughflow cross section, and **in that** a control face (65) of the piston (40), on which control face (65) the said piston (40) can be loaded in the direction of a more pronounced restriction of the throughflow cross section, is greater than the said control face (23, 24) of the closing member (18).

7. Valve according to Claim 5 or 6, **characterized in that** the valve has an installation kit (12), comprising the closing member (18), and a control cover (30) which covers an installation hole (14) which receives the installation kit (12), **in that** a spring space (25) is formed between the closing member (18) and the control cover (30), **in that** the piston (40) is guided movably in a cylindrical cavity (42, 44) in the control cover (30), and **in that** the stop member (50) protrudes into the spring space (25), starting from the piston (40).

8. Valve according to Claim 7, **characterized in that** a piston rod (46) is provided on the piston (40), which piston rod (46) is guided to the outside on a side (35) of the control cover (30), which side (35) faces away from the installation hole (14), **in that** the piston (40) and the piston rod (46) are provided with a continuous axial hole (48), and **in that** a pin (50) is screwed into the axial hole (48) and protrudes into the spring space (25).

9. Valve according to one of Claims 1 to 8, **characterized in that** a collar (70) is provided on the stop member (50), on which collar (70) a spring (74) is supported which loads the closing member (18) in the direction of an increase of the throughflow cross section.

10. Valve according to one of Claims 1 to 9, **characterized in that** it is configured in a seat-valve design.

11. Valve according to one of Claims 1 to 10, **characterized in that** a measuring apparatus is provided by way of which a position of the stop member (50) can be detected, in particular a displacement sensor or a limit switch (60).

12. Valve according to one of Claims 1 to 11, **characterized in that** the stop member (50) is configured as a hydraulic actuating member, **in that** there is a displacement sensor (157) for detecting the position of the stop member (50), and **in that** the stop member (50) is subjected to position regulation.

13. Valve according to one of Claims 1 to 12, **characterized in that** a hydromechanical stop damping means is provided between the stop member (50) and the closing member (18).

14. Hydraulic control arrangement for actuating a hydraulic consumer having a valve according to one of Claims 1 to 13.

15. Hydraulic control arrangement according to Claim 14, for controlling a fluidic connection between a casting cylinder of a cold-chamber die casting machine and a fluid reservoir using a valve according to Claim 12 or 13.

## Revendications

1. Soupape avec deux raccords fluidiques (21, 22) et un organe de fermeture (18) guidé de manière mobile, qui peut être commuté entre une première position dans laquelle il libère un section transversale d'écoulement entre les deux raccords fluidiques (21, 22) et une deuxième position dans laquelle il bloque une liaison fluidique entre les deux raccords fluidiques (21, 22), et comprenant un organe de butée (50) qui permet de limiter la section transversale d'écoulement pouvant être libérée au maximum par l'organe de fermeture (18), l'organe de butée (50) pouvant être déplacé par un dispositif de réglage à commande à distance (30, 40) entre différentes positions de butée, **caractérisée en ce que**
l'organe de fermeture (18) est réalisé sous forme de piston étagé, **en ce que** le piston étagé délimite, avec une surface annulaire (A2), un espace annulaire et **en ce que** le piston étagé peut être sollicité, au niveau de la surface annulaire (A2), dans la direction d'ouverture, avec une pression de commande,
deux autres surfaces de commande (A1, A3) étant formées sur des côtés frontaux opposés sur le piston étagé, **en ce que** les deux surfaces de commande (A1, A3) sont sollicitées par une pression dans un raccord de sortie (21), et **en ce que** les deux surfaces de commande (A1 et A3) présentent au total un excès de surface dans le sens d'un blocage de la liaison fluidique,
le piston étagé présentant un alésage traversant axial (159).

2. Soupape selon la revendication 1, **caractérisée en ce que** le dispositif de réglage (30, 40) présente un actionneur (40) accouplé à l'organe de butée (50), lequel peut être déplacé entre des positions de réglage prédéfinies (62, 64).

3. Soupape selon la revendication 2, **caractérisée en ce que** la section transversale d'écoulement pouvant être libérée au maximum pour une position de réglage prédéfinie (62) peut être ajustée.

4. Soupape selon la revendication 3, **caractérisée en ce qu'**une position de butée de l'organe de butée (50) adoptée dans la position de réglage prédéfinie (62) peut être ajustée.

5. Soupape selon l'une quelconque des revendications 1 à 4, **caractérisée en ce que** l'organe de butée (50) peut être réglé par un piston (40) pouvant être sollicité par voie hydraulique.

6. Soupape selon la revendication 5, **caractérisée en ce qu'**une surface de commande (23, 24) est prévue sur l'organe de fermeture (18), au niveau de laquelle une pression appliquée dans l'un des raccords fluidiques (21, 22) sollicite l'organe de fermeture (18) dans le sens d'une augmentation de la section transversale d'écoulement, et **en ce qu'**une surface de commande (65) du piston (40), au niveau de laquelle celui-ci peut être sollicité dans le sens d'une plus forte limitation de la section transversale d'écoulement, est supérieure à ladite surface de commande (23, 24) de l'organe de fermeture (18).

7. Soupape selon la revendication 5 ou 6, **caractérisée en ce que** la soupape présente un ensemble de montage (12) comprenant l'organe de fermeture (18) et un couvercle de commande (30) qui recouvre un alésage de montage (14) recevant l'ensemble de montage (12), **en ce qu'**entre l'organe de fermeture (18) et le couvercle de commande (30) est formé un espace de ressort (25), **en ce que** le piston (40) est guidé de manière déplaçable dans une cavité cylindrique (42, 44) dans le couvercle de commande (30) et **en ce que** l'organe de butée (50) fait saillie à partir du piston (40) dans l'espace de ressort (25).

8. Soupape selon la revendication 7, **caractérisée en ce qu'**une tige de piston (46) est prévue sur le piston (40), laquelle est guidée vers l'extérieur au niveau d'un côté (35) du couvercle de commande (30) opposé à l'alésage de montage (14), **en ce que** le piston (40) et la tige de piston (46) sont pourvus d'un alésage axial traversant (48) et **en ce qu'**une goupille (50) est vissée dans l'alésage axial (48) et fait saillie dans l'espace de ressort (25).

9. Soupape selon l'une quelconque des revendications 1 à 8, **caractérisée en ce qu'**une coupelle (70) est prévue sur l'organe de butée (50), au niveau de laquelle s'appuie un ressort (74) sollicitant l'organe de fermeture (18) dans le sens d'une augmentation de la section transversale d'écoulement.

10. Soupape selon l'une quelconque des revendications 1 à 9, **caractérisée en ce qu'**elle est réalisée suivant une construction de soupape à siège.

11. Soupape selon l'une quelconque des revendications 1 à 10, **caractérisée en ce qu'**il est prévu un dispositif de mesure avec lequel une position de l'organe de butée (50) peut être détectée, en particulier un capteur de position ou un commutateur de fin de course (60).

12. Soupape selon l'une quelconque des revendications 1 à 11, **caractérisée en ce que** l'organe de butée (50) est réalisé sous forme d'actionneur hydraulique, **en ce qu'**un capteur de position (157) est prévu pour détecter la position de l'organe de butée (50) et **en ce que** l'organe de butée (50) est soumis à un réglage de position.

13. Soupape selon l'une quelconque des revendications 1 à 12, **caractérisée en ce qu'**entre l'organe de butée (50) et l'organe de fermeture (18) est prévu un amortissement de butée hydromécanique.

14. Agencement de commande hydraulique pour commander un consommateur hydraulique avec une soupape selon l'une quelconque des revendications 1 à 13.

15. Agencement de commande hydraulique selon la revendication 14, pour commander une liaison fluidique entre un cylindre de coulée d'une machine de coulée sous pression à chambre froide et un accumulateur de fluide en utilisant une soupape selon l'une quelconque des revendications 12 ou 13.
